(19) **Europäisches Patentamt**

**European Patent Office**

**Office européen des brevets**

(11) **EP 0 762 139 B1**

(12) **FASCICULE DE BREVET EUROPEEN**

(45) Date de publication et mention
de la délivrance du brevet:
**20.02.2002 Bulletin 2002/08**

(51) Int Cl.⁷: **G01S 5/16**, G01B 11/26

(21) Numéro de dépôt: **96401884.0**

(22) Date de dépôt: **03.09.1996**

(54) **Dispositif optique de détermination de l'orientation d'un solide**

Optische Vorrichtung zur Bestimmung der Orientierung eines Festkörpers

Optical device for the determination of the orientation of a solid

(84) Etats contractants désignés:
**BE DE ES GB IT SE**

(30) Priorité: **08.09.1995 FR 9510532**

(43) Date de publication de la demande:
**12.03.1997 Bulletin 1997/11**

(73) Titulaire: **THALES AVIONICS S.A.**
**78141 Vélizy Villacoublay Cédex (FR)**

(72) Inventeurs:
• **Barbier, Bruno c/o Thomson-CSF**
**94117 Arcueil Cédex (FR)**
• **Lach, Patrick c/o Thomson-CSF**
**94117 Arcueil Cédex (FR)**

(74) Mandataire: **Guérin, Michel et al**
**Thomson-CSF Propriété Intellectuelle, 13,**
**Avenue du Président Salvador Allende**
**94117 Arcueil Cédex (FR)**

(56) Documents cités:
**EP-A- 0 155 858          FR-A- 2 634 015**
**GB-A- 2 061 548**

• **RUSSIAN ENGINEERING RESEARCH, vol. 13,**
**no. 4, 1993, NEW YORK,USA, page 74**
**XP000468913 V. S. DOROSHUK ET AL.:**
**"Electron-optic device for controlling surface**
**position deviations in body-type parts"**

**Description**

La présente invention concerne un dispositif de détermination de l'orientation d'un solide quelconque dans un espace donné.

De nombreux systèmes nécessitent de connaître et de suivre l'évolution, en quasi temps réel, des paramètres d'orientation d'un solide dans un référentiel donné. C'est notamment le cas des systèmes viseurs montés sur le casque même des pilotes d'avions ou d'hélicoptères, et permettant aux pilotes de voir l'image d'un réticule projeté à l'infini en superposition avec les scènes extérieures. Les images présentées au pilote doivent impérativement rester en correspondance avec le référentiel du porteur (avion, hélicoptère ...) quels que soient les mouvements du casque par rapport à ce dernier, de façon à désigner, par exemple une cible visée à un système d'arme.

Il est connu d'utiliser un détecteur électromagnétique de position et d'orientation, comportant d'une part, un émetteur fixe dans le référentiel donné, composé de trois bobines excitées alternativement par un générateur, et d'autre part, un capteur fixé au solide et composé également de trois bobines, de telle sorte qu'à chaque position du solide correspondent neuf signaux induits par les bobines de l'émetteur, ces neuf signaux permettant le calcul de la position et de l'orientation du solide. Cependant, les champs électromagnétiques créés ou induits peuvent être notablement perturbés du fait de tous les éléments métalliques de l'environnement, et un tel détecteur nécessite soit de disposer de moyens annexes pour fournir un signal de référence en vue d'effectuer une correction (brevet français n° 2 655 415), soit de réaliser, dans une phase préalable, une modélisation prenant en compte les perturbations.

Il existe également des systèmes électrooptiques consistant à disposer sur le solide un certain nombre de marques, ponctuelles ou surfaciques, émissives ou non, et dont la position dans un repère Rm lié au solide est bien connu, puis de repérer, par des capteurs optiques fixes dans le repères Rf de l'espace de mesure, la position d'un certain nombre de droites ou courbes reliant au moins deux marques distinctes du solide. On peut montrer que l'erreur de mesure des paramètres d'orientation du solide est d'une part, proportionnelle à l'incertitude des mesures de position des marques dans le repère Rf et d'autre part inversement proportionnelle à la distance séparant les marques. De tels systèmes sont donc plutôt adaptés à des solides de grande taille pour lesquels les marques peuvent être très espacées, mais les mesures nécessitent toujours de calculer la position d'au moins deux points du solide.

Pour s'affranchir de la détermination de position qui n'est pas nécessaire pour déterminer l'orientation, une solution a été proposée dans la demande de brevet publiée 2 683 036 par la demanderesse. Il s'agit d'utiliser des sources de rayonnement collimatées sur le mobile et des capteurs de direction, dans un repère fixe.

De la sorte, la direction du rayonnement détecté par un capteur de direction est indépendante de la position du mobile.

L'orientation du solide est entièrement déterminée par la connaissance de l'orientation des deux directions fixes du mobile.

Néanmoins, cette solution impose la visibilité permanente d'au moins deux sources collimatées par deux capteurs. Ce qui implique une grande quantité de sources collimatées et/ou de capteurs de direction, ou bien encore des sources collimatées de grande taille.

Dans ce contexte, pour déterminer l'orientation d'un solide de manière indépendante de la position dudit solide, avec une bonne précision et à l'aide de moyens peu encombrants l'invention a pour objet un dispositif optique de détermination de l'orientation d'un repère Rm lié à un premier solide (1) par rapport à un repère Rf lié à un second solide dit de référence caractérisé en ce que :

- le solide (1) comprend au moins un combiné constitué d'une source optique $S_{mi}$ et d'un détecteur de rayonnement optique $C_{mi}$ ;
- le solide de référence comprend au moins un combiné constitué d'une source optique $S_{fj}$ et d'un détecteur de rayonnement optique $C_{fj}$;
- les sources optiques $S_{mi}$ et $S_{fj}$ sont conjuguées ou confondues avec les centres des diaphragmes de champ dont sont équipés les capteurs de rayonnement optique ;
- au moins un des solides (1) ou de référence comprend au moins deux combinés de manière à définir au moins deux droites de direction $\vec{u}$ et $\vec{v}$ joignant deux couples de sources ($S_{mi}$, $S_{fj}$);
- le dispositif optique comprend des moyens de calcul des paramètres d'orientation du repère Rm par rapport au repère Rf à partir des coordonnées des vecteurs $\vec{u}$ et $\vec{v}$ déterminés à la fois dans le repère Rm et dans le repère Rf.

La détermination de l'orientation du solide (1) par rapport au repère Rf passe par la mesure de l'orientation d'au moins deux directions distinctes, comme dans la demande de brevet précisée 2 683 036, cependant selon l'invention chacune des directions n'est ni fixe dans le repère Rf, ni fixe dans le repère Rm. Chacune des directions est celle d'une droite qui est mesurée à la fois dans le repère Rm et dans le repère Rf.

La connaissance de l'orientation d'au moins deux droites distinctes dans chacun des repères donne par calcul, les trois paramètres d'orientation du solide (1) par rapport au repère Rf.

Notons qu'une différence importante avec l'art antérieur se trouve au niveau des sources de lumière qui ne sont plus collimatées, mais omnidirectionnelles. Ainsi toute une gamme de directions de rayonnement optique émis par une source $S_{mi}$ est susceptible d'être détectée par un détecteur $C_{fj}$ et réciproquement pour une source $S_{fj}$ vis-à-vis d'un détecteur $C_{mi}$, lors du changement d'orientation du solide (1) par rapport au solide de référence.

Dans le dispositif selon l'invention, les sources optiques $S_{mi}$ et $S_{fj}$ sont conjuguées avec les centres des diaphragmes de champ dont sont équipés les capteurs de rayonnement optique. Dans une telle configuration la position relative d'une source $S_{mi}$ ($S_{fj}$) par rapport au capteur de direction associé $C_{mi}$ ($C_{fj}$), est telle que toutes les directions mesurées sont celles de droite passant par la source $S_{mi}$ ($S_{fj}$).

Plus précisément, la direction de la source $S_{fj}$ mesurée par le capteur $C_{mi}$ est celle de la droite joignant la source $S_{fj}$ à la source $S_{mi}$. De même, la direction de la source $S_{mi}$ mesurée par le capteur $C_{fj}$ est celle de cette même droite joignant les deux sources $S_{fj}$ et $S_{mi}$.

Il s'ensuit que les capteurs $C_{mi}$ et $C_{fj}$ mesurent séparément la direction de la même droite.

Dans le dispositif selon l'invention, cette opération est effectuée au moins simultanément deux fois entre le solide (1) et le solide de référence de manière à définir simultanément la direction de deux droites.

Les capteurs du dispositif selon l'invention peuvent avantageusement être surfaciques ou linéiques avec les diaphragmes de champ associés qui conviennent.

Dans le cas d'application concernant des systèmes viseurs équipés sur des casques de pilote, le solide de référence peut être la cabine de l'aéronef dans lequel se trouve le pilote, le solide (1) étant le casque lui-même du pilote.

L'invention sera mieux comprise et d'autres avantages apparaîtront à la lecture de la description qui va suivre et grâce aux figures annexées parmi lesquelles :

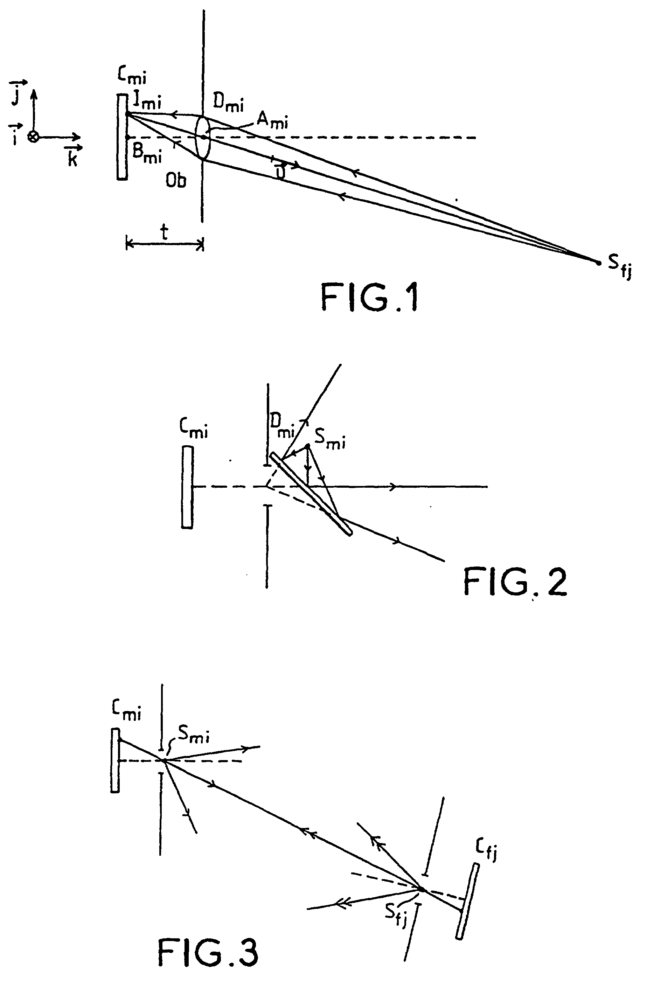

- la figure 1 illustre un exemple de dispositif de détermination de l'orientation d'un solide selon l'art connu ;
- la figure 1 schématise la détection d'une source $S_{fj}$ par un capteur surfacique $C_{mi}$ ;
- la figure 2 schématise un combiné source $S_{mi}$/capteur associé $C_{mi}$, comprenant un miroir semi-réfléchissant ;
- la figure 3 illustre un exemple de direction de rayonnement optique issu à la fois des sources $S_{mi}$ et $S_{fj}$ et détectée par les capteurs $C_{mi}$ et $C_{fj}$ ;
- la figure 4 schématise les repères Rm et Rf, le repère Rm étant équipé de deux combinés pour recevoir des directions de rayonnement lumineux selon les vecteurs $\vec{u}$ et $\vec{v}$ indiqués ;
- la figure 5 illustre un exemple de combiné source/capteur utilisant un couple de capteurs linéiques $C_{mi1}$ et $C_{mi2}$.

Par la détermination de deux droites relatives à des directions de rayonnement issus des deux repères Rm et Rf, le dispositif selon l'invention permet une détermination de l'orientation du solide (1) sans nécessiter des mesures supplémentaires de position et permet de s'affranchir des mesures par triangulation comme cela est classiquement le cas. Par là même, la précision sur la mesure d'orientation ne dépend pas de la précision d'une mesure de position.

En utilisant des sources pouvant être ponctuelles et omnidirectionnelles on peut disposer d'un équipement de petite taille et donc d'intégration facile, notamment au niveau d'un casque.

Nous allons décrire le principe de fonctionnement du dispositif selon l'invention, dans le cas d'un dispositif utilisant des détecteurs surfaciques de rayonnement optique.

La figure 1 illustre la détection par un détecteur $C_{mi}$ équipé d'un diaphragme $D_{mi}$, dans le repère Rm, d'une source $S_{fj}$ située dans le repère Rf. La source $S_{fj}$ étant omnidirectionnelle, une partie de son rayonnement est nécessairement interceptée par le capteur $C_{mi}$, séparé du diaphragme qui lui est associé par une distance t. Le capteur $C_{mi}$ peut avantageusement être équipé d'un objectif de focalisation de l'énergie de manière à focaliser au mieux l'énergie du rayonnement optique issu de la source $S_{fj}$, sur le capteur $C_{mi}$, permettant ainsi d'augmenter la sensibilité du capteur.

La figure 2 est relative à un combiné capteur $C_{mi}$/source $S_{mi}$, dans lequel l'image de la source est au centre du diaphragme. On peut en effet écarter la source $S_{mi}$ du diaphragme en utilisant un miroir de type semi-réfléchissant, capable de réfléchir le flux lumineux issu de la source $S_{mi}$ et de transmettre le flux lumineux issu d'une source $S_{fj}$ situé dans le repère Rf.

La figure 3 illustre un exemple de direction de rayonnement optique issu à la fois des sources $S_{mi}$ et $S_{fj}$ et détectée par les capteurs $C_{mi}$ et $C_{fj}$.

Dans le solide (1) on définit un repère orthonormé Rm, constitué de trois vecteurs unitaires $(\vec{i}, \vec{j}, \vec{k})$ $\vec{i}$ et $\vec{j}$ définissent les deux directions orthogonales de référence du plan du capteur surfacique, $\vec{k}$ étant relative à la normale au plan du capteur. Sur chaque capteur $C_{mi}$, la position $I_{mj}$ du centre de la tache d'éclairement issu d'une source $S_{fj}$ est ainsi donnée par ses coordonnées x et y dans le plan du capteur $C_{mi}$ par rapport au centre $B_{mi}$ du capteur $C_{mi}$ (comme illustré en figure 1). La direction de la source $S_{fj}$ est donnée par l'orientation de la droite $I_{mi}A_{mi}$ si $A_{mi}$ est le centre du diaphragme $D_{mi}$ associé au capteur $C_{mi}$. Les composantes du vecteur $I_{mi}A_{mi}$ par rapport au repère $(\vec{i}, \vec{j}, \vec{k})$ sont ainsi (x, y, t).

Les composantes du vecteur unitaire $\vec{u}$ donnant l'orientation de la droite $I_{mi}A_{mi}$ sont donc par rapport à ce repère :

$$a_{mi} = x/(x^2 + y^2 + t^2)^{1/2}$$

$$b_{mi} = y/(x^2 + y^2 + t^2)^{1/2}$$

$$c_{mi} = t/(x^2 + y^2 + t^2)^{1/2}$$

De même il est possible de définir l'orientation de la droite $I_{fj}A_{fj}$ si $A_{fj}$ est le centre du diaphragme $D_{fj}$ associé au capteur $C_{fj}$ et $I_{fj}$ la position du centre de la tache d'éclairement issu de la source $S_{mi}$.

Les droites identiques $I_{mi}A_{mi}$ et $I_{fj}A_{fj}$ peuvent donc être définies dans le repère Rm par des coordonnées ($a_{mi}$, $b_{mi}$, $c_{mi}$) et dans le repère Rf par des coordonnées ($a_{fj}$, $b_{fj}$, $c_{fj}$).

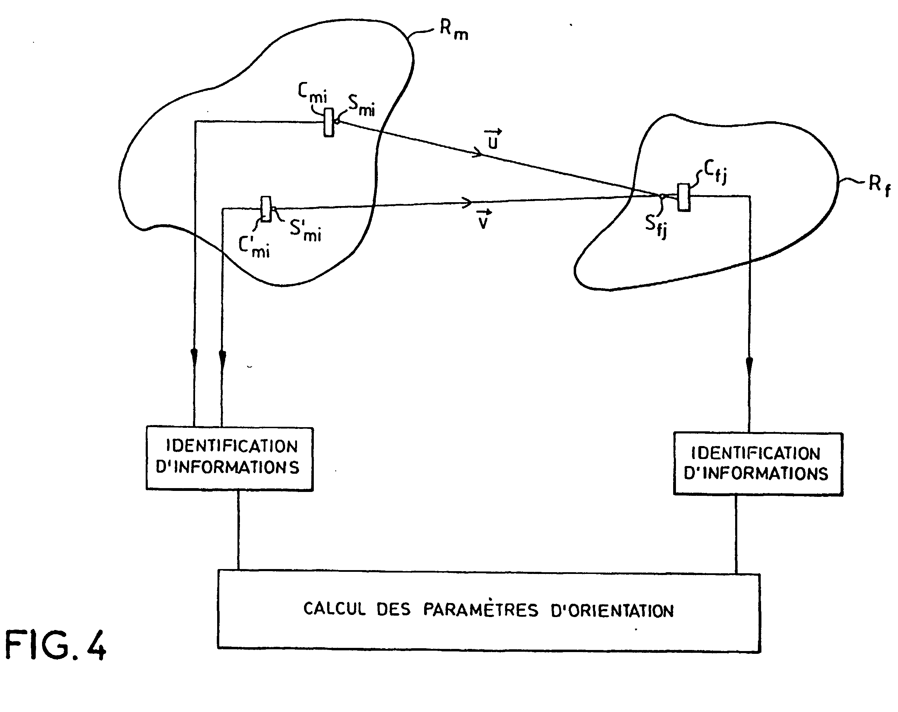

Puisque selon l'invention, le dispositif comprend, dans au moins un repère, deux combinés source/détecteur, par exemple, dans le repère Rm, deux combinés ($S_{mi}$, $C_{mi}$) et ($S'_{mi}$, $C'_{mi}$) comme l'illustre la figure 4, on peut définir au moins un autre vecteur $\vec{v}$ unitaire donnant l'orientation d'une droite $I'_{mi}A'_{mi}$.

Chaque capteur transmet les informations qu'ils recueillent, toutes ces informations étant traitées pour définir les paramètres d'orientation d'un repère par rapport à l'autre.

Pour le détail du calcul, on notera ($a'_{mi}$, $b'_{mi}$, $c'_{mi}$) les coordonnées du vecteur unitaire $\vec{v}$ dans le repère Rm et ($a'_{fj}$, $b'_{fj}$, $c'_{fj}$) les coordonnées de ce vecteur unitaire dans le repère Rf.

A partir des vecteurs $\vec{u}$ et $\vec{v}$ connus dans les deux repères, on peut définir le vecteur unitaire $\vec{w}$ perpendiculaire au plan défini par les vecteurs $\vec{u}$ et $\vec{v}$, $\vec{w} = \vec{u} \wedge \vec{v}$ ($\wedge$ désignant le produit vectoriel).

Les coordonnées du vecteur $\vec{w}$ dans le repère Rm sont ainsi données par les équations suivantes :

$$A_{mi} = b_{mi}.c'_{mi} - b'_{mi}.c_{mi}$$

$$B_{mi} = c_{mi}.a'_{mi} - c'_{mi}.a_{mi}$$

$$C_{mi} = a_{mi}.b'_{mi} - a'_{mi}.b_{mi}$$

De même on peut définir les composantes du vecteur $\vec{w}$ dans le repère Rf par les équations suivantes :

$$A_{fj} = b_{fj}.C'_{fj} - b'_{fj}.C_{fj}$$

$$B_{fj} = C_{fj}.a'_{fj} - c'_{fj}.a_{fj}$$

$$C_{fj} = a_{fj}.b'_{fj} - a'_{fj}.b_{fj}$$

On introduit alors le vecteur $\vec{v}'$ appartenant au plan défini par les vecteurs $\vec{u}$ et $\vec{v}$ et perpendiculaire au vecteur $\vec{u}$. Ce vecteur perpendiculaire à $\vec{u}$ et à $\vec{w}$ est donné par l'expression $\vec{v}' = \vec{w} \wedge \vec{u}$.

Les composantes du vecteur $\vec{v}'$ dans le repère Rm sont donc données par les équations suivantes :

$$A'_{mi} = B_{mi}.c_{mi} - b_{mi}.C_{mi}$$

$$B'_{mi} = C_{mi}.a_{mi} - c_{mi}.A_{mi}$$

$$C'_{mi} = A_{mi}.b_{mi} - a_{mi}.B_{mi}$$

Les composantes du vecteur $\vec{v}'$ dans le repère Rf sont donc aussi données par les équations suivantes :

$$A'_{fj} = b_{fj}.C_{fj} - b_{fj}.C_{fj}$$

$$B'_{fj} = C_{fj}.a_{fj} - c_{fj}.A_{fj}$$

$$C'_{fj} = A_{fj}.b_{fj} - a_{fj}.B_{fj}$$

La matrice 3x3 qui a pour colonnes les composantes des vecteurs $\vec{u}$, $\vec{v}'$ et $\vec{w}$ dans le repère Rm a pour expression :

$$\left[ M_{mi} \right] = \begin{bmatrix} a_{mi} & A'_{mi} & A_{mi} \\ b_{mi} & B'_{mi} & B_{mi} \\ C_{mi} & C'_{mi} & C_{mi} \end{bmatrix}$$

La matrice 3x3 qui a pour colonnes les composantes des vecteurs $\vec{u}$, $\vec{v}'$ et $\vec{w}$ dans le repère Rf a pour expression :

$$\left[ M_{fj} \right] = \begin{bmatrix} a_{fj} & A'_{fj} & A_{fj} \\ b_{fj} & B'_{fj} & B_{fj} \\ c_{fj} & C'_{fj} & C_{fj} \end{bmatrix}$$

La matrice de rotation recherchée [R] qui exprime la rotation du solide (1) lié à Rm par rapport au solide de référence lié à Rf, relie également les composantes des vecteurs $\vec{u}$, $\vec{v}'$ et $\vec{w}$ dans le repère fixe Rf aux composantes de ces mêmes vecteurs dans le repère Rm.
Ainsi

$$[M_{fj}] = [R].[M_{mi}]$$

Soit encore

$$[R] [M_{fj}].[M_{mi}]^{-1}$$

La matrice $[M_{mi}]^{-1}$, inverse de la matrice $[M_{mi}]$ est aussi sa transposée. Plus précisément, l'expression de la matrice [R] cherchée est:

$$[R] = \begin{bmatrix} a_{fj} & A'_{fj} & A_{fj} \\ b_{fj} & B'_{fj} & B_{fj} \\ C_{fj} & C'_{fj} & C_{fj} \end{bmatrix} . \begin{bmatrix} a_{mi} & b_{mi} & c_{mi} \\ A'_{mi} & B'_{mi} & C'_{mi} \\ A_{mi} & B_{mi} & C_{mi} \end{bmatrix}$$

Ainsi, à partir des positions d'éclairement des sources associées au repère Rf, sur des capteurs plans $C_{mi}$ associés au repère Rm, on est en mesure de déterminer l'orientation du mobile (1) par rapport au mobile de référence.

Notamment, il est possible de déterminer l'orientation du casque d'un pilote équipé de sources et de capteurs ($S_{mi}$, $C_{mi}$), par rapport à la cabine de pilotage elle-même équipée de sources et de capteurs ($S_{fj}$, $C_{fj}$).

Typiquement, les capteurs surfaciques utilisés peuvent avantageusement être spatialement discontinus, constitués d'une mosaïque d'éléments photosensibles régulièrement espacés et alignés, selon une structure matricielle, en lignes et colonnes.

Ces capteurs délivrent cycliquement un signal électrique (vidéo) successivement proportionnel à l'éclairement de chaque élément photosensible et intégré pendant une durée donnée. Il peut s'agir de matrice de photocapteurs à transfert de charge (en anglais CCD, pour Charge Coupled Device).

La connaissance du profil, même spatialement échantillonné, de la zone éclairée sur le capteur permet de calculer la position du centre de cette zone éclairée avec une précision meilleure que celle du pas entre éléments photosensibles.

Les sources de lumière peuvent avantageusement être des diodes électroluminescentes (émettant par exemple dans l'infrarouge) leur rayonnement peut être rendu indétectable ou facilement rejectable par le capteur associé grâce à l'utilisation d'un miroir semi-réfléchissant, mais également par l'utilisation d'un décalage optique en longueur d'onde (le capteur surfacique n'est pas sensible à la longueur d'onde émise par la source associée.

On peut également utiliser un codage temporel pour assurer la non-détection d'une source de lumière par le capteur associé.

Le diaphragme de champ peut être constitué d'un trou circulaire ménagé dans un matériau opaque au rayonnement de la source ponctuelle dont on cherche à mesurer la direction, par rapport à la normale au plan du photodétecteur, par exemple.

Dans une seconde variante de l'invention, les capteurs utilisés sont des couples de capteurs linéiques les combinés dont sont équipés les repères Rm et Rf comprennent alors chacun :

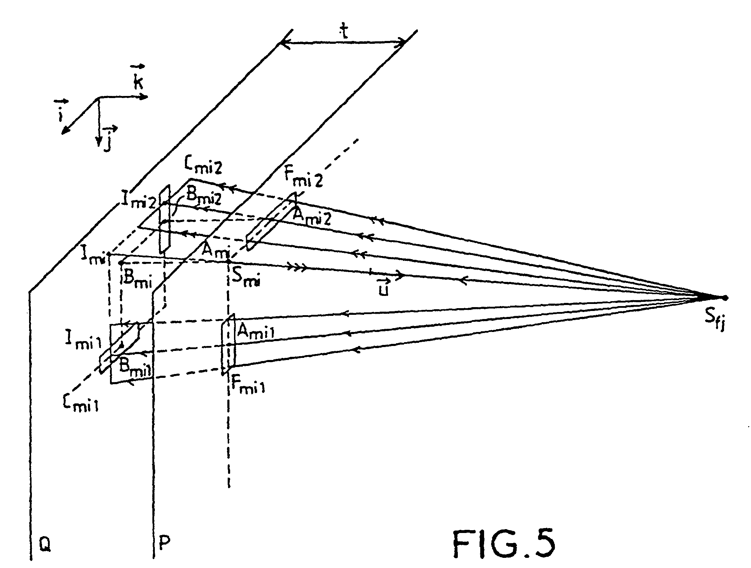

- deux capteurs linéiques coplanaires $C_{mi1}$ et $C_{mi2}$ (respectivement $C_{fj1}$ et $C_{fj2}$), dont les axes sont perpendiculaires entre eux ;
- deux diaphragmes de champ en forme de fentes $F_{mi1}$ et $F_{mi2}$ coplanaires (respectivement $F_{fj1}$ et $F_{fj2}$) dont les axes sont perpendiculaires entre eux ;
- une source ponctuelle $S_{mi}$ (respectivement $S_{fj}$) positionnée dans le plan des fentes, à l'intersection des axes des fentes, comme illustré en figure 5.

Il apparaît que le plan $P_{mi}$ des capteurs et le plan $Q_{mi}$ des fentes sont parallèles et distants de t dans le repère Rm (la situation est analogue dans le repère Rf).

Les fentes $F_{mi1}$ et $F_{mi2}$ sont respectivement perpendiculaires aux capteurs $C_{mi1}$ et $C_{mi2}$.

Les centres $A_{mi1}$ et $A_{mi2}$ des fentes $F_{mi1}$ et $F_{mi2}$ sont positionnés sur les mêmes normales au plan $P_{mi}$ que les centres $B_{mi1}$ et $B_{mi2}$ des capteurs $C_{mi1}$ et $C_{mi2}$.

Les positions $I_{mi1}$ et $I_{mi2}$ des centres des zones éclairées sur les photocapteurs donnent les plans sur lesquels se trouve la source mesurée $S_{fj}$:

- le plan issu de $I_{mi1}$ et passant par la fente $F_1$
- le plan issu de $I_{mi2}$ et passant par la fente F2

Pour augmenter la sensibilité des capteurs linéiques $C_{mi1}$ et $C_{mi2}$, il est possible de leur associer des objectifs de focalisation $Ob_{mi1}$ et $Ob_{mi2}$, constitués par exemple d'une lentille cylindrique de distance focale égale à la distance t.

De même que dans la variante de l'invention utilisant des capteurs surfaciques, on peut définir le repère orthonormé Rm par des vecteurs unitaires ($\vec{i}, \vec{j}, \vec{k}$) dont deux directions sont définies orthogonalement aux axes des capteurs linéiques $C_{mi1}$ et $C_{mi2}$ et la troisième direction est définie par la normale commune aux plans $P_{mi}$ des capteurs et au plan $Q_{mi}$ des fentes.

Les positions $I_{mi1}$ et $I_{mi2}$ du centre des taches d'éclairement sur chaque capteur $C_{mi1}$ et $C_{mi2}$ sont données respectivement par leurs coordonnées x ou y, le long du capteur par rapport au centre $B_{mi1}$ et $B_{mi2}$ de chaque capteur.

La direction dans laquelle se trouve la source $S_{mj}$ inconnue est donnée :

- par le plan contenant l'axe de la fente $F_{mi1}$ et le centre de tache $I_{mi1}$ ;
- par le plan contenant l'axe de la fente $F_{mi2}$ et le centre de taxe $I_{mi2}$.

L'intersection de ces deux plans est la droite qui contient

- le point de concours $A_{mi}$ des axes des fentes
- le point $I_{mi}$, intersection entre

* la droite passant par le centre de tache $I_{mi1}$ et parallèle à l'axe de la fente $F_{mi1}$
* la droite passant par le centre de tache $I_{mi2}$ et parallèle à l'axe de la fente $F_{mi2}$

La direction de la source $S_{fj}$ inconnue est donc donnée par l'orientation de la droite $I_{mi}A_{mi}$, qui passe par le point de concours $A_{mi}$ des axes des fentes. Les composantes du vecteur $I_{mi}A_{mi}$ par rapport au repère $(\vec{i}, \vec{j}, \vec{k})$ sont (x, y, t). Les composantes du vecteur unitaire $\vec{u}$ donnant l'orientation de la droite $I_{mi}S_{fj}$ sont donc par rapport à ce repère, identiques à celles définies dans le cadre de capteurs surfaciques, à savoir :

$$a_{mi} = x/\sqrt{x^2 + y^2 + t^2}$$

$$b_{mi} = y/\sqrt{x^2 + y^2 + t^2}$$

$$c_{mi} = t/\sqrt{x^2 + y^2 + t^2}$$

Dans cette variante de l'invention, les sources utilisées peuvent également être des diodes électroluminescentes.

Les capteurs linéiques peuvent être des barrettes de photocapteurs à transfert de charge (CCD).

L'avantage de l'utilisation de capteurs linéiques réside dans leur cadence de fonctionnement plus rapide que celle des capteurs surfaciques et dans leur faible encombrement.

## Revendications

1. Dispositif optique de détermination de l'orientation d'un repère Rm lié à un premier solide (1) par rapport à un repère Rf lié à un second solide dit de référence **caractérisé en ce que** :

   - la solide (1) comprend au moins un combiné constitué d'une source optique $S_{mi}$ et d'un détecteur de rayonnement optique $C_{mi}$ ;
   - le solide de référence comprend au moins un combiné constitué d'une source optique $S_{fj}$ et d'un détecteur de rayonnement optique $C_{fj}$ ;
   - les sources optiques $S_{mi}$ et $S_{fj}$ sont conjuguées ou superposées avec les centres des diaphragmes de champ dont sont équipés les capteurs de rayonnement optique ;
   - au moins un des solides (1) ou de référence comprend au moins deux combinés de manière à définir au moins deux droites de direction $\vec{u}$ et $\vec{v}$ joignant deux couples de sources $(S_{mi}, S_{fj})$, $(S'_{mi}, S_{fj})$ ;
   - le dispositif optique comprend des moyens de calcul des paramètres d'orientation du repère Rm par rapport au repère Rf à partir des coordonnées des vecteurs $\vec{u}$ et $\vec{v}$ déterminés à la fois dans le repère Rm et dans le repère Rf.

2. Dispositif optique selon la revendication 1, **caractérisé en ce que** les capteurs de rayonnement optique sont des capteurs surfaciques, équipés de diaphragme de champ parallèle au plan du capteur.

3. Dispositif optique selon la revendication 2, **caractérisé en ce que** les capteurs de rayonnement optique sont spatialement discontinus de type mosaïque d'éléments photosensibles.

4. Dispositif optique selon la revendication 3, **caractérisé en ce que** les capteurs discontinus de rayonnement optique sont des matrices de photocapteurs à transfert de charge (CCD).

5. Dispositif optique selon l'une des revendications 2 à 4, **caractérisé en ce que** les sources optiques sont des sources ponctuelles disposées au centre des diaphragmes de champs.

6. Dispositif optique selon l'une des revendications 2 à 4, **caractérisé en ce que** les images des sources optiques sont disposées au centre des diaphragmes de champ, un miroir de type semi-réfléchissant étant positionné entre chaque source et le diaphragme de champ associé.

7. Dispositif optique selon la revendication 1, **caractérisé en ce que** chaque capteur $C_{mi}$ ou $C_{fj}$ comprend deux

capteurs linéiques élémentaires $C_{mi1}$ et $C_{mi2}$ ou $C_{fj1}$ et $C_{fj2}$, lesdits capteurs linéiques élémentaires étant coplanaires et possédant des axes non parallèles entre eux, lesdits capteurs linéiques étant associés à des diaphragmes de champ en forme de fentes coplanaires et perpendiculaires à la fente associée ; les sources optiques $S_{mi}$ ou $S_{fj}$ étant placées à l'intersection des axes desdites fentes.

**8.** Dispositif optique selon la revendication 7, **caractérisé en ce que** les capteurs linéiques sont de type barrettes de photocapteurs à transfert de charge.

**9.** Dispositif optique selon l'une des revendications 1 à 8, **caractérisé en ce que** les sources optiques sont des diodes électroluminescentes.

**10.** Dispositif optique selon l'une des revendications 1 à 9, **caractérisé en ce que** le repère est la cabine d'un aéronef dans lequel est situé un pilote équipé d'un casque, le solide (1) étant le casque du pilote.

## Claims

**1.** Optical device for determining the orientation of a referential system Rm related to a first solid (1) with respect to a referential system Rf related to a second solid called a reference solid, **characterized in that**,

- the solid (1) comprises at least one set consisting of an optical source $S_{mi}$ and an optical radiation detector $C_{mi}$;
- the reference solid comprises at least one set consisting of an optical source $S_{fj}$ and an optical radiation detector $C_{fj}$;
- the optical sources $S_{mi}$ and $S_{fj}$ are conjugate with or superimposed on the centres of the field diaphragms with which the optical radiation sensors are equipped:
- at least one of the solids (1) or reference solids comprises at least two sets so as to define at least two straight lines having direction $\vec{u}$ and $\vec{v}$ joining two pairs of sources $(S_{mi}, S_{fj})$, $(S'_{mi}, S'_{fj})$;
- the optical device has means to compute parameters for the orientation of the referential system Rm with respect to the referential system Rf from the co-ordinates of the vectors $\vec{u}$ and $\vec{v}$ determined both in the referential system Rm and in the referential system Rf.

**2.** Optical device according to Claim 1, **characterized in that** the optical radiation sensors are surface sensors, equipped with field diaphragm parallel to the plane of the sensor.

**3.** Optical device according to Claim 2, **characterized in that** the optical radiation sensors are spatially discontinuous, of the mosaic type with photosensitive elements.

**4.** Optical device according to Claim 3, **characterized in that** the discontinuous sensors of optical radiation are charge-coupled device (CCD) type photosensor matrices.

**5.** Optical device according to one of Claims 2 to 4, **characterized in that** the optical sources are point sources positioned at the centre of the field diaphragms.

**6.** Optical device according to one of Claims 2 to 4, **characterized in that** the images of the optical sources are positioned at the centre of the field diaphragms, a semi-reflector type mirror being positioned between each source and the associated field diaphragm.

**7.** Optical device according to Claim 1, **characterized in that** each sensor $C_{mi}$ or $C_{fj}$ comprises two elementary lineal sensors $C_{mi1}$ and $C_{mi2}$ or $C_{fj1}$ and $C_{fj2}$, said elementary lineal sensors being coplanar and having axes that are not parallel with each other, said lineal sensors being associated with field diaphragms in the form of slots coplanar with and perpendicular to the associated slot; the optical sources $S_{mi}$ or $S_{fj}$ being placed at the intersection of the axes of said slots.

**8.** Optical device according to Claim 7, **characterized in that** the lineal sensors are linear array type CCD photosensors.

**9.** Optical device according to one of Claims 1 to 8, **characterized in that** the optical sources are light-emitting diodes.

**EP 0 762 139 B1**

10. Optical device according to one of Claims 1 to 9, **characterized in that** the referential system is the cockpit of an aircraft in which there is placed a pilot equipped with a helmet, the solid (1) being the pilot's helmet.

**Patentansprüche**

1. Optische Vorrichtung zur Bestimmung der Orientierung eines mit einem ersten Körper (1) verknüpften Bezugssystems Rm bezüglich eines mit einem zweiten Körper, Bezugskörper genannt, verknüpften Bezugssystems Rf, **dadurch gekennzeichnet, daß**

   - der Körper (1) mindestens eine Kombination aus einer Lichtquelle $S_{mi}$ und einem Lichtdetektor $C_{mi}$ enthält;
   - der Bezugskörper mindestens eine Kombination aus einer Lichtquelle $S_{fj}$ und einem Lichtdetektor $C_{fj}$ enthält;
   - die Lichtquellen $S_{mi}$ und $S_{fj}$ konjugiert sind oder mit den Zentren der Feldblenden, welche die Lichtdetektoren enthalten, zusammenfallen;
   - der Körper (1) oder der Bezugskörper oder beide mindestens zwei solche Kombinationen enthalten, um mindestens zwei Gerade einer Richtung $\vec{u}$ beziehungsweise $\vec{v}$ zu definieren, die zwei Paare von Quellen ($S_{mi}$, $S_{fj}$),($S'_{mi}$, $S'_{fj}$) miteinander verbinden;
   - wobei die optische Vorrichtung Mittel zur Berechnung der Orientierungsparameter des Bezugssystems Rm hinsichtlich des Bezugssystems Rf ausgehend von den Koordinaten der Vektoren $\vec{u}$ and $\vec{v}$ aufweist, die sowohl im Bezugssystem Rm als auch im Bezugssystem Rf bestimmt sind.

2. Optische Vorrichtung nach Anspruch 1, **dadurch gekennzeichnet, daß** die Lichtmeßsonden flächige Sonden sind, die mit einer Feldblende parallel zur Ebene der Sonden versehen sind.

3. Optische Vorrichtung nach Anspruch 2, **dadurch gekennzeichnet, daß** die Lichtmeßsonden räumlich diskontinuierlich sind und ein Mosaik von lichtempfindlichen Elementen bilden.

4. Optische Vorrichtung nach Anspruch 3, **dadurch gekennzeichnet, daß** die diskontinuierlichen Lichtmeßsonden Matrizen von Lichtmeßelementen mit Ladungstransfer (CCD) sind.

5. Optische Vorrichtung nach einem der Ansprüche 2 bis 4, **dadurch gekennzeichnet, daß** die Lichtquellen punktförmige Lichtquellen sind, die im Zentrum der Feldblenden liegen.

6. Optische Vorrichtung nach einem der Ansprüche 2 bis 4, **dadurch gekennzeichnet, daß** die Bilder der Lichtquellen im Zentrum der Feldblenden entstehen, wobei ein halbreflektierender Spiegel zwischen jeder Quelle und der zugeordneten Feldblende angeordnet ist.

7. Optische Vorrichtung nach Anspruch 1, **dadurch gekennzeichnet, daß** jede Sonde $C_{mi}$ oder $C_{fj}$ zwei linienförmige Elementarsonden $C_{mi1}$ und $C_{mi2}$ beziehungsweise $C_{fj1}$ und $C_{fj2}$ enthält, wobei die linienförmigen Elementarsonden koplanar sind und Achsen besitzen, die zueinander nicht parallel sind, wobei Feldblenden in Form von koplanaren Schlitzen den linienförmigen Sonden zugeordnet sind, die jeweils senkrecht zum zugeordneten Schlitz verlaufen, und daß die Lichtquelle $S_{mi}$ beziehungsweise $S_{fj}$ im Schnittpunkt der Achsen der Schlitze liegt.

8. Optische Vorrichtung nach Anspruch 7, **dadurch gekennzeichnet, daß** die linienförmigen Sonden Leisten von lichtempfindlichen Elementen mit Ladungstransfer sind.

9. Optische Vorrichtung nach einem der Ansprüche 1 bis 8, **dadurch gekennzeichnet, daß** die Lichtquellen Elektrolumineszenzdioden sind.

10. Optische Vorrichtung nach einem der Ansprüche 1 bis 9, **dadurch gekennzeichnet, daß** das Bezugssystem die Kabine eines Flugzeugs ist, in dem ein einen Helm tragender Pilot sitzt, während der Helm des Piloten den Körper (1) bildet.

9

FIG.1

FIG.2

FIG.3

FIG.4

EP 0 762 139 B1

FIG.5